# EUROPEAN PATENT APPLICATION

(11) **EP 4 666 832 A1**
(43) Date of publication of application: **24.12.2025**
(21) Application number: 24183606.3
(22) Date of filing: 21.06.2024
(51) Int. Cl.: A01D 41/14, A01D 57/04

(54) **REEL CONTROL FOR A HEADER FOR A COMBINE HARVESTER**

(71) Applicant: CNH Industrial Belgium N.V., 8210 Zedelgem (BE)
(72) Inventor: Vandewalle, Bert, 8210 Zedelgem (BE); Leenknegt, Arno, 8210 Zedelgem (BE); Cornette, Lucas, 8210 Zedelgem (BE); Jongmans, Dré W.J., 8210 Zedelgem (BE); Missotten, Bart M.A., 8210 Zedelgem (BE); Deruyter, Lucas, 8210 Zedelgem (BE)
(74) Representative: CNH Industrial IP Department

(57) **Abstract**

A header (18) for a combine harvester (10) is provided. The header (18) comprises a header frame (82) and a reel (36) rotatably mounted to the header frame (18). At least one actuator (86) is mounted to the reel (36) and is configured for adjusting a position of the reel (36) relative to the header frame (82). At least one actuator sensor (88) is coupled to the at least one actuator (86) and is configured to generate an actuator signal representative of a force on the reel (36). A controller (100) is operably coupled to the at least one actuator sensor (88) and is configured to receive the actuator signal from the at least one actuator sensor (88) and to operate the at least one actuator (86) to adjust the position of the reel (36) relative to the header frame (82) in dependence of the actuator signal.

## Description

### TECHNICAL FIELD

The present invention relates to a header for a combine harvester. The present invention further relates to a combine harvester and a method of controlling a header of a combine harvester.

### BACKGROUND

Combine harvesters, also simply called combines, are complex driving agricultural machinery comprising a variety of mechanical tools for reaping grain crops from a field, feeding the reaped crop into the crop processing core of the combine, threshing the grain, and separating the threshed grain from the straw and other non-grain material. In most combine harvesters, a cleaning system is provided for separating the chaff from the grain kernels. The cleaned grain is then transported from the cleaning system to a grain tank wherein the grain is temporarily stored until the grain tank is unloaded into a trailer or at a grain storage facility.

While harvesting the header of the combine harvester is normally positioned relatively close to the ground to process a maximum amount of straw and minimise the amount of plant material that is left behind on the field. A reel is rotatably mounted to the header to facilitate the cutting of the crop and to pull the cut crop into the crop processing core of the combine as the harvester drives forward. The position of the reel is adjusted to the circumstances. Normally, the reel is positioned such that only a lower portion of the reel moves through and engages with the crop while the reel rotates. In the event of lodged crop, the reel is often lowered to a position just above the ground surface to allow a plurality of reel fingers that are attached to the reel can lift the lodged crop from the ground, thereby allow a cutter bar of the header to cut the crop. For efficient and effective harvesting, continuous and accurate control of the reel height is important. If the reel height is too high, crop may not be effectively reaped. If the reel height is too low, the reel fingers may contact or penetrate the ground which can damage the harvester and so is not desired.

It is an aim of the present invention to provide a header for a combine harvester with improved height control for harvesting lodged crop.

### SUMMARY OF THE INVENTION

According to an aspect of the invention there is provided a header for a combine harvester. The header comprises a header frame and a reel rotatably mounted to the header frame. At least one actuator is mounted to the reel and is configured for adjusting a position of the reel relative to the header frame. At least one actuator sensor is coupled to the at least one actuator and is configured to generate an actuator signal representative of a force on the reel. A controller is operably coupled to the at least one actuator sensor and is configured to receive the actuator signal from the at least one actuator sensor and to operate the at least one actuator to adjust the position of the reel relative to the header frame in dependence of the actuator signal.

In order to harvest lodged crop, the reel height relative to the ground beneath the crop is ideally as low as possible. The crop and ground will each exert a force on the reel when contact is made. This force on the reel is indicative of the position of the reel within the crop and when in contact with the ground. Because the reel is at least partly supported by the at least one actuator, the actuator signal generated by the actuator sensor provides a reliable indicator of the force on the reel. By, directly or indirectly, measuring the force on the reel, the position of the reel can be optimized in order to ensure that the reel is low enough to reap the lodged crop but high enough to not contact the ground, thereby increasing the amount of crop fed through the header while minimizing losses.

It is to be noted that the controller may be located in the harvester and not on the header itself. The controller may be a dedicated controller for monitoring and controlling the header only, or the header control algorithms may be executed by a central controller of the combine harvester itself.

The at least one actuator may be configured for vertically and/or horizontally adjusting the position of the reel relative to the header frame. The position of the reel can therefore be adjusted to take into account variations in crop height, crop density, and in the topography of the crop and the field. The force on the reel may have vertical or horizontal components, and will typically have both. When the reel touches the ground, or is partly supported by a large mass of dense crop, a weight of the reel on a reel actuator for vertical reel position adjustment is reduced. Similarly, when driving through the field with the reel fingers scraping over the ground surface or the reel being pushed through a large mass of dense crop, this will be observable in the actuator signal from a reel actuator for horizontal reel position adjustment.

In a preferred embodiment, the controller is further configured to, based on the actuator signal, detect a ground contact of the reel, and to operate the at least one actuator in dependence of the ground contact. In a simple implementation of this, the reel is automatically, and preferably immediately, lifted by a predetermined distance as soon as the actuator signal crosses a certain threshold that indicates the ground contact.

In a more advanced implementation, the controller may further be configured to, based on the actuator signal, determine an extent of the ground contact, and to operate the at least one actuator in dependence of the extent of the ground contact. For example, various actuator signal levels may indicate a light, medium, or high level of ground contact, with the reel fingers just barely scratching the ground surface in the event of light contact and experience high, jerky resistance in the event of high level ground contact. For optimal close to the ground operation and the ability to pick up as much as possible of the lodged crop, the reel height may be continuously adjusted to maintain light ground contact. Alternatively, a speed with which the reel is lifted when detecting the ground contact may depend on the determined extent of the ground contact.

In a further implementation, the controller may further be configured to, based on the actuator signal, determine a portion of the reel that is engaged with a crop, and to operate the at least one actuator in dependence of the portion of the reel that is engaged with the crop. The larger the portion of the reel that is engaged with the crop, the lower the weight of the reel as measured by a vertical reel actuator, and the larger the force upon a horizontal reel actuator may be. Accordingly, the actuator signals from one or more of the reel actuators can be used to determine how deep the reel is inserted into the crop. In the event that the height of the crop is known too, then the portion of the reel that is engaged with the crop can further be used to determine an absolute height of the reel above the ground. Crop height may, for example, be measured using cameras, LiDAR, or RADAR sensors, or by combining GPS-type location data with detailed crop height maps or yield maps indicating the crop height at specific locations in the field. The crop height maps or yield maps might be based on data collected during a previous harvest and/or other previous agricultural operations, or might be based on prior collected aerial and/or satellite data.

According to another aspect of the invention, the controller may be configured to adjust a ground speed, also called forward speed, of the harvester or a height of the header frame relative to the ground in dependence of the actuator signal. For example, a ground speed may be reduced when the reel is not yet positioned at an optimal height, in order to minimise crop loss, or reduce the risk of damaging the reel fingers and other parts of the header. The header may, e.g., be raised to quickly lift the reel and the cutter bar when it is determined that the reel is in a dangerously low position.

In preferred embodiments, the at least one actuator may be a hydraulic actuator. Hydraulic actuators allow for quick and accurate control of the position of the reel. Alternatively, electric or pneumatic actuators may be used. The actuator sensor may, for example, be a hydraulic pressure sensor, a pneumatic pressure sensor, a mechanic pressure sensor, or a load cell. The load cell can measure directly or indirectly a force or a load, or can also measure a displacement, indicating a change in the force or load. When the reel touches the ground, the reel might be pushed upwards, which can be measured by a displacement, which is an indirect way of measuring a change in the force or load. According to another aspect of the invention, a combine harvester is provided comprising a header as described above.

According to yet another aspect of the invention, a method of controlling a header of a combine harvester is provided. The method comprises a step of receiving an actuator signal from at least one actuator sensor, coupled to an actuator mounted to a reel of the header for adjusting a position of the reel relative to a header frame of the header. The method further comprises a step of, based on the actuator signal, determining a reel control signal for operating the actuator to adjust the position of the reel relative to the header frame, and a step of sending the reel control signal to the actuator.

According to a further aspect of the invention, the actuator signal is sampled and stored in combination with the actual position of the combine harvester to create a map. This map contains information about the lodged crop distribution over the field and can be used for later harvesting and/or other agricultural operations.

### BRIEF DESCRIPTION OF THE DRAWINGS

Embodiments of the invention will now be described by way of example with reference to the accompanying drawings, in which:
Figure 1 schematically shows a combine harvester that may take advantage of the invention.
Figure 2 shows a perspective view of a header for use with the combine harvester of Figure 1.
Figure 3 shows a side profile of a rotatable reel and header frame for a combine harvester as shown in Figure 1 or 2.
Figure 4 schematically shows a side profile of the rotatable reel of the header of Figure 2 or 3 in three different positions relative to the field.
Figure 5 shows a graphical representation of a force exerted on the rotatable reel of Figure 3 over a period of time in a hypothetical harvesting scenario.
Figure 6 is a simplified flow chart for header control in an embodiment of the invention.
Figure 7 is a more detailed flow chart for header control in an embodiment of the invention.

### DETAILED DESCRIPTION

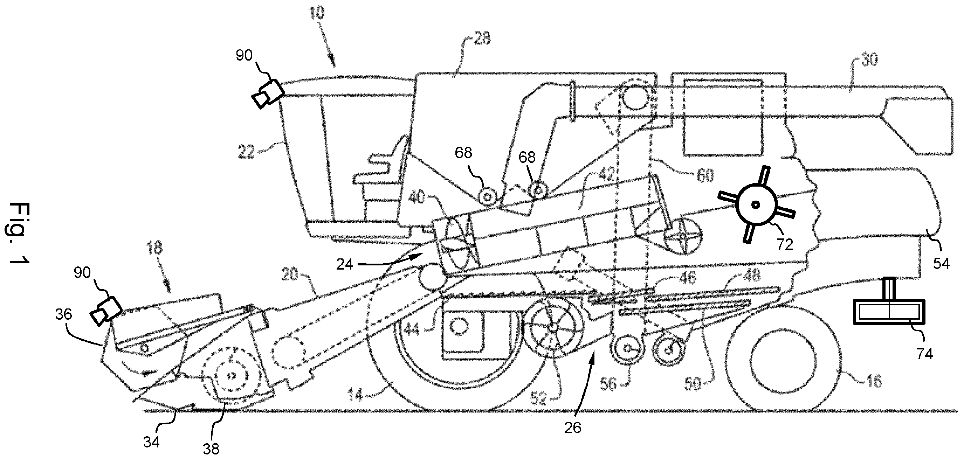

Figure 1 schematically shows an agricultural harvester in the form of a combine harvester 10. A combine harvester 10 as shown in Figure 1 generally includes front and rear ground engaging wheels 14, 16, a header 18, a feeder 20, an operator cabin 22, a threshing and separation system 24, a cleaning system 26, a grain tank 28 and an unloading tube 30.

A header 18 is mounted to the front of the combine harvester 10 and includes a cutter bar 34 for severing crops from a field during forward motion of the combine. A rotatable reel 36 feeds the crop into the header 18, and a intake auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a chopper 72 and spread over the field across the full width of the header 18 by a spreader system 74. The spreader system 74 typically comprises a left and a right rotary spreader, each spreading the chopped crop residue received from the chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

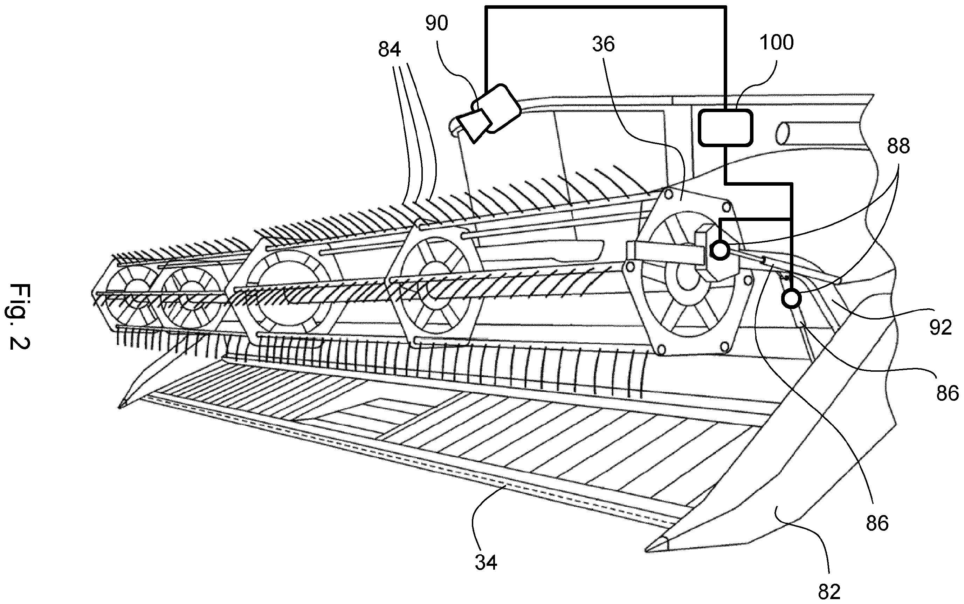

Figure 2 shows a perspective view of the header 18 mounted to the front of the harvester 10. The header 18 comprises a header frame 82 on which the rotatable reel 36 and an intake auger 38 are mounted. The reel 36 may be a multi-segmented reel whereby one or more segments make up the reel 36 and can be controlled separately. The cutter bar 34 is positioned at the front of the header 18 with the intake auger 38 positioned behind the cutter bar 34. The reel 36 is positioned above the cutter bar 34 and the intake auger 38 as illustrated in Figures 1 and 2.

A controller 100 is configured to monitor and control settings of the header 18. The settings of the header 18 comprise, for example, a header height, a position of the reel 36 relative to the header frame 82, a position of one or more of the segments of the reel 36 relative to the header frame 82, a rotational speed of the reel 36, a reel finger angle, a position of the cutter bar 34 relative to the header frame 82, and a rotational speed of the intake auger 38, and an orientation of the header frame 82 relative to the harvester 10. Additional settings may also be controlled by the controller 100 where applicable. The controller 100 may be located within the header 18 itself or in the harvester 10. Algorithms for controlling the header 18 and the header settings may be executed by a dedicated header controller 100 or by a central controller 100 of the harvester 10.

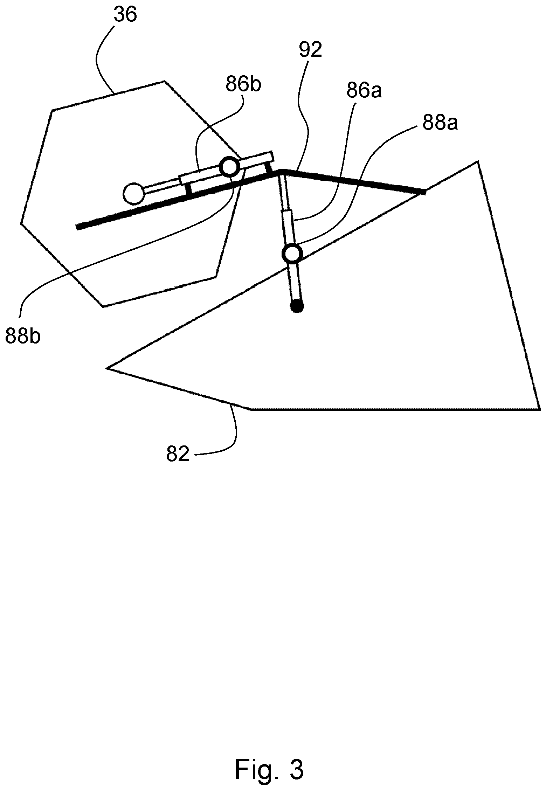

Figure 3 shows a side profile of a rotatable reel 36 and header frame 82 for a combine harvester 10 as shown in Figure 1 or 2. The reel 36 is supported by two reel arms 92 that are mounted to either end of the header frame 82. In other headers, one or more reel arms 92 may be mounted to the header frame 82 in a more central position. One or more reel actuators 86 which are operated by the controller 100 to adjust the position of the reel 36 relative to the header frame 82. For example, a reel actuator 86a is mounted between the header frame 82 and a reel arm 92 for lifting and lowering the reel 36 relative to the header frame 82, and another reel actuator 86b is mounted between the reel arm 92 and the reel 36 for moving the reel 36 forward and rearward relative to the reel arm 92. One or more sensors 88 are coupled to the actuators 86 and are configured to measure a force on the actuators 86 caused by the reel 36 contacting the crop and/or ground. For example, an actuator sensor 88a is coupled to the reel actuator 86a, and another actuator sensor 88b is coupled to the reel actuator 86b. Similar actuators 86 and actuator sensors 88 are placed on the opposing side of the header frame 82 so that the reel 36 may be adjusted in a symmetrical manner. The relative position of the reel 36 is adjustable vertically and horizontally by reel actuators 86a and 86b such that variations in crop heights and densities and the topology of the crop and field can be taken into account.

The actuators 86 may be hydraulic, electric, or pneumatic. These actuators 86 allow for quick and accurate control of the position of the reel 36, thereby improving the reactiveness of the system.

The reel 36 is rotated by the drive motor controlled by the controller 100. The rotational speed of the reel 36 can be adjusted to lift crop into the header 18 at a specific rate to take into account the properties of the crop, the topology of the crop and field, and the harvester's 10 ground speed. The cutter bar 34 is also adjustable in a fore and aft direction relative to the header frame 82 by the controller 100.

As the reel 36 rotates, reel fingers 84 on the reel 36 lift the crop in front of the header 18 such that the cutter bar 34 can cut the crop. The severed crop is pulled into the intake auger 38 as the harvester 10 drives forwards through the crop where the crop can be fed into the feeder 20 and subsequently into the threshing and separation system 24.

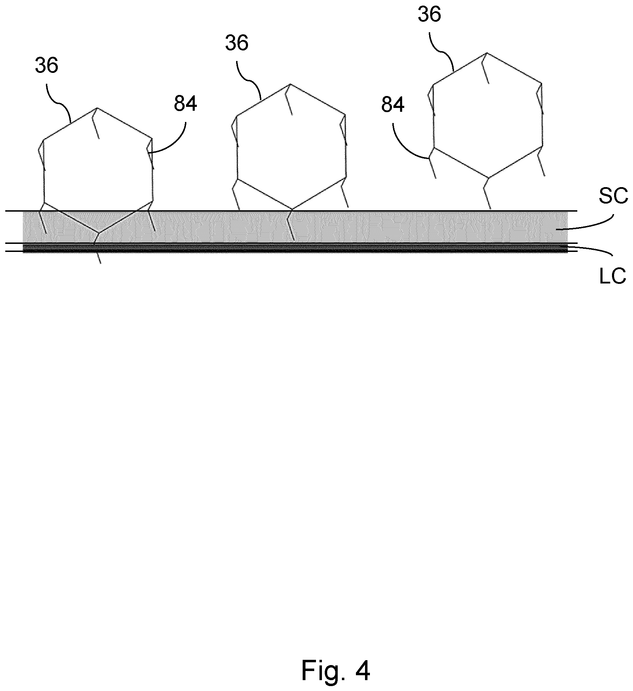

Figure 4 schematically shows a side profile or cross section of the rotatable reel 36 of the header 18 of Figure 2 or 3 in three different positions relative to the field. The field cross section is schematically indicated to have a zone with standing crop (SC) having a nominal crop height, and a zone with lodged crop (LC) having a much lower crop height because the lodged crop lies practically flat or almost flat on the ground surface. In this side profile, three exemplary reel height positions, relative to the ground and the crop zone (SC, LC), are schematically indicated. It is to be noted that Figure 4 is not drawn to scale. The relative sizes and heights of the reel 36, the reel fingers (also called tines) 84, and the two crop heights SC, LC may vary in different embodiments and harvesting situations.

In the middle example, the reel 36 is positioned at a normal operational height such that the reel 36 does not or hardly contact the crop but the reel fingers 84 are engaged in the standing crop such that it can be lifted and/or pulled into the header frame 82, towards the intake auger 38. Crop can be cut appropriately and reaped without the reel fingers 84 contacting the ground, allowing for effective reaping without damaging the reel 36.

The left-most example of Figure 4 shows the reel 36 at a height closer to the ground than the normal operation height. Driving the reel 36 at a lower height than in normal operation can be useful when harvesting the lodged crop which is much closer to the ground than normal crop. By bringing the rotating reel fingers 84 as close to the ground as possible, it is possible to lift the lodged crop from the ground such that it can subsequently be cut by the cutter bar 34. In the example shown here, however, the reel 36 is positioned too close to the ground and the reel fingers 84 are penetrating the ground. Contact with or penetration into the ground while the reel 36 is rotating and the combine 10 moves forward can cause damage to the reel fingers 84, the reel 36, and the reel support arms 92 and thus is not desired.

The right-most example of Figure 4 shows the reel 36 at a height above the crop where the reel 36 and the reel fingers 84 are not able to contact the crop. Crop passing beneath the reel 36 in this position cannot be lifted or pulled in and the reel 36 will thus not be able to assist in obtaining a constant crop flow from the header 18 into the feeder 20.

When the reel 36 contacts the crop and/or the ground, the crop and ground will each exert a force on the reel 36. This force is indicative of the position of the reel 36 within the crop and the height of the reel 36 above the ground. The deeper the reel 36 is inserted into the crop, the higher a horizontal force on the reel 36 will be when the harvester 10 moves through the field. When the reel 36 gets in contact with the ground, part of the reel weight is supported by the ground and a vertical force on the reel 36 will decrease. The same may happen, to a smaller extent, when the reel 36 is partly supported by, or floating in, a dense crop field. The reel 36 is relatively rigid and transfers the force variations caused by contact with the crop and/or the ground to the actuators 86 supporting the reel 36.

During use, the actuator sensors 88 coupled to the actuators 86 generate actuator signals representative of the contact with the crop and/or ground on the reel 36 based on the measured force on the actuators 86. The actuator sensors 88 may, for example, be a hydraulic pressure sensor, a mechanical pressure sensor, or a load cell. For example, a hydraulic pressure sensor may be coupled to a reel drive motor or a hydraulic actuator. A mechanical pressure sensor, such as a compression force transducer, or a load cell may be coupled to a vertical and/or horizontal actuator.

The actuator signals are sent to the controller 100 for monitoring. The controller 100 may adjust the relative position of the reel 36 by operating the actuators 86 based on the actuator signals. The controller 100 may also adjust other header settings separately or concurrently when adjusting the relative position of the reel 36. In this way, the operation of the header 18 and the reel 36 can be optimized to take into account variations in crop height, crop density, and the topography of the crop and field.

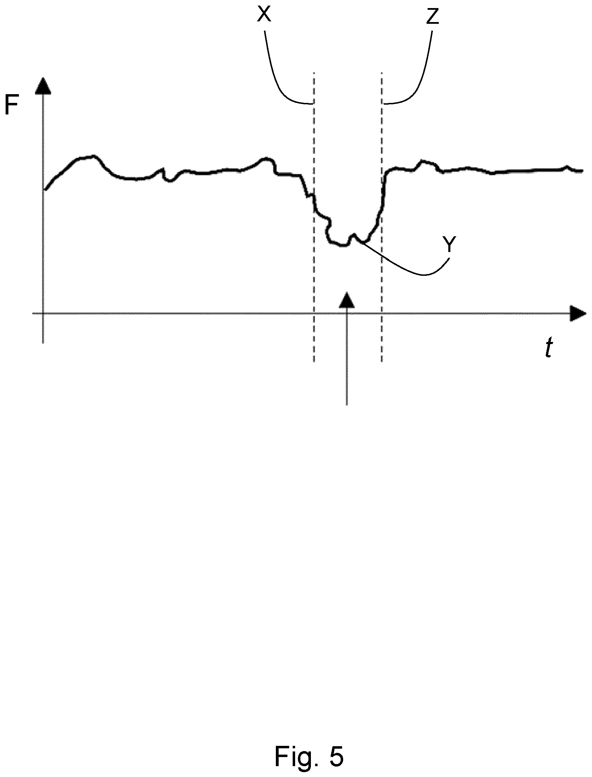

Figure 5 shows a graphical representation of a force exerted on the rotatable reel 36 of Figure 3 over a period of time in a hypothetical harvesting scenario. The vertical axis of the diagram of Figure 5 represents a force exerted on the reel 36 based on the actuator signals, and the horizontal axis of Figure 4 represents time. It is to be noted that different sensors 88, depending on, e.g., their mounting position and orientation, will show different signal profiles for the same reel position. For example, some sensors 88 will be better in picking up variations in horizontal components of the force on the reel 36. Other sensors 88 will be better in picking up variations in vertical components of the force on the reel 36. More accurate results may be obtained by combining measurements from multiple sensors 88.

At point X in the diagram of Figure 5, the reel 36 scratches the ground and thus contact is established. The force exerted on the reel 36 corresponds to the weight of the reel 36 which, at this point, is partly supported by the ground. As a result, the sensor signal drops and the ground contact is detected. When this ground contact is detected, the controller 100 may start adjusting the relative position of the reel 36 and/or other header settings in order to lift the reel 36 out of contact with the ground at point Y in Figure 5. At point Z, the reel 36 has been lifted high enough so that the reel 36 is no longer in contact with the ground and the sensor signal returns to the initial level.

According to an embodiment, the controller 100 may be configured to detect ground contact with the reel 36 based on the actuator signals crossing a threshold, for example by a magnitude of the actuator signals. The threshold can be preset to indicate ground contact. Upon ground contact detection, the controller 100 is configured to operate primarily actuator 86a (and actuator 86b if required) to increase the vertical position of the reel 36 relative to the header frame 82, thus raising the reel's height above the ground and reducing or stopping contact with the ground. The controller 100 may also be configured to raise the header 18 to increase the reel's height above the ground.

According to an embodiment, the operator may adjust the thresholds for the actuator signals to change how intense the reel grabs into the lodged crop. The operator might adjust the thresholds via the user interface in the cab. In this way, the operator can take into account different situations, like different crop, different type of crop lodging, different type of crop, different soil and ambient condition, like dry or humid.

According to an embodiment, the controller 100 may be configured to determine an extent or level of crop engagement and/or ground contact based on the actuator signals. Various levels of crop engagement and/or ground contact may be based on a magnitude of the actuator signals. For example, a minimal amount of force or no force on the actuators may indicate that the reel 36 is above the crop such that the crop is not engaged. Crop engagement may correspond to the reel 36 being in the crop but above the ground such that the reel fingers 84 do not contact the ground. A light ground contact may correspond to the reel fingers 84 making minor contact with the ground and just barely scratching the ground surface. A medium ground contact may correspond to a higher contact force compared to the light ground contact, whereby the reel fingers 84 are in contact with the ground such that a moderate level of resistance is experienced by the reel 36. A heavy ground contact may correspond to a higher contract force compared to both the medium and light ground contacts, whereby the reel fingers 84 have penetrated the ground causing a high and discontinuous level of resistance on the reel 36. It will be appreciated that other appropriate levels of ground resistance may be implemented.

Light ground contact (or equivalent contact level) is, for example, desirable when harvesting lodged crop. With the reel 36 being as low as possible to the ground without being damaged, the lodged crop can be lifted from the ground and reaped effectively. The controller 100 may thus be configured to operate the reel actuators 86 to continually adjust the reel's relative position to ensure the reel 36 maintains light ground contact while harvesting. For example, this may be achieved by maintaining the actuator signals between an upper and lower threshold such that the actuator signals stay within a force interval corresponding to an optimal position of the reel 36 relative to the header frame 82. Other header settings, such as the speed at which the position of the reel 36 is adjusted and/or the direction of rotation of the reel 36 can be adjusted too for further improving the maintenance of the light ground contact.

In a different mode of operation, the controller 100 may be configured to determine a finer level of crop engagement with the reel 36, for example by, based on the actuator signals, controlling a portion of the reel 36 that is to be kept in contact with the crop. When the reel 36 engages the crop, the crop will exert a force on the reel 36 corresponding to the partial weight of the reel 36 that is being supported by the crop. The larger the portion of the reel 36 that is being engaged by the crop, the higher the contact force and the lower the weight of the reel 36 on the vertical actuators 86. The crop will exert a horizontal force on the reel 36 when the reel 36 is engaged with the crop and the harvester 10 drives forwards. The faster the ground speed of the harvester 10, the higher the horizontal force on the reel 36, and thus the higher the force on the horizontal actuators 86. Accordingly, the actuator sensor signals can be used to monitor a position of the reel 36 relative to the crop and the controller 100 can then use these actuator sensor signals to control the actuators 86 in such a way as to keep the reel 36 engaged with the crop to the desired extent.

The height and density of the crop may also be measured by one or more forward looking sensors 90 before the crop is incident on the harvester 10, thus improving the positioning of the reel 36 relative to the header frame 82. The forward looking sensors 90 may be cameras, LiDAR, or RADAR and may be located on the top of the cabin 22 of the harvester 10 to get an elevated view of the crop in front of the harvester 10. The forward looking sensors 90 may also be located on the header 18 itself such that the height and density of the crop immediately in front of the harvester 10 can be measured. GPS-type location data with detailed yield maps can also indicate crop properties, such as crop height and crop density, at specific locations in the field.

The forward sensors 90 may be configured to generate forward looking signals representative of the height and density of the crop in front of the harvester 10 which can be used to determine the topography of the field. The controller 100 may be operably coupled to the forward sensors 90 and is configured to determine an absolute height of the reel 36 above the ground based on the topography of the crop, dimensions of the header 18, and a current relative position of the reel 36. For example, dimensions of the harvester 10 and header 18 and their respective components can be pre-set and stored in the controller 100. The controller 100 may be configured to monitor and control the position of the reel 36 relative to the header frame 82. The height of the reel 36 above the bottom of the header frame 82 can therefore be determined. By taking into account the topography of the field, the height of the header frame 82 above the ground can be determined, and therefore also the absolute height of the reel 36 above the ground. The reel 36 can therefore be positioned as low as possible to the ground without making contact, therefore allowing the reel's position in the crop to be maintained at an optimal level when harvesting lodged crop. Moreover, the controller 100 may adjust other operational settings of the harvester 10 and/or header 18 as well as the position of the reel 36 relative to the header frame 82 based on the actuator signals and the forward looking signals, improving the positioning of the reel 36 within the crop.

Furthermore, the controller 100 may be configured to adjust a ground speed of the harvester 10 based on the actuator signals. The ground speed may be reduced when a relatively high force is detected in the actuators 86 to allow the reel 36 to be repositioned when, for example, the reel 36 is at a suboptimal height above the ground. Crop loss can therefore be minimized and the risk of damaging components of the header 18 before or during the repositioning can be reduced. The ground speed may be increased when the actuator sensors 88 indicate that the reel 36 is at an optimal height for efficiently harvesting the crop. A height of the header frame 82 relative to the ground may also be adjusted based on the actuator signals. For example, the header frame 82 may be raised to lift the reel 36 and the cutter bar 34 more quickly when the reel 36 is determined to be too low to the ground and in danger of being damaged.

The actuator sensors 88 provide the controller 100 with substantially constant actuator signals which in turn allows the controller 100 to operate the actuators 86 continuously and automatically to adjust the position of the reel 36 relative to the header frame 82. This feedback loop ensures the reel 36 is maintained at an optimal height in the crop and header losses are minimised.

The controller 100 may further be configured to pre-emptily adjust the position of the reel 36 relative to the header frame 82 upon detection of lodged crop in front of the header 18 and/or harvester 10. This detection may occur automatically based on the forward looking sensors 90 described above, or the operator may observe an area of lodge crop in front of the header 18 and manually activates a lodged crop harvesting mode. Upon activating this mode, the controller 100 may be configured to pre-emptively adjust the position of the reel 36 relative to the header frame 82 by a pre-determined amount such that the reel 36 and the reel fingers 84 are lowered closer to the ground to ensure the lodged crop is reaped. Alternatively, or additionally, the forward looking sensors 90 may be used for providing feedback about a height of the reel 36 above the lodged crop. When the reel 36 has been lowered to a height closer to the ground, the controller 100 processes the signals from the actuator signals 88 and controls the reel height based thereon, to ensure that the reel 36 and the reel fingers 84 do not run into the ground while keeping the reel fingers 84 engaged with the lodged crop.

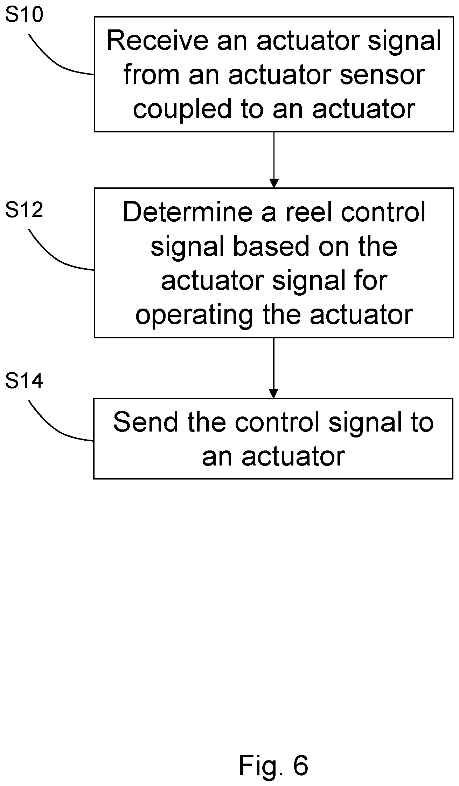

Figure 6 is a simplified flow chart for header control and provides a method for controlling the header 18 for implementing the embodiments of the invention described in Figures 1-5.

At step S10, the controller 100 receives an actuator signal from an actuator sensor 88a, 88b coupled to a respective actuator 86a, 86b. The actuator signal is representative of a force being exerted on the reel 36 due to the reel 36 and/or reel fingers 84 contacting the ground and/or crop as the harvester 10 drives forwards.

At step S12, based on the actuator signal, the controller 100 determines a control signal for operating the actuator 86a, 86b to reposition the reel 36 relative to the header frame 82. For example, the control signal may be configured to operate the actuator 86a to raise the reel 36 if the controller 100 determines that the reel 36 is in contact with the ground. The control signal may also be configured to operate the actuator 86a to lower the reel 36 if the controller 100 determines that the reel 36 is too far above the crop and/or ground.

At step S14, the controller 100 sends the control signal the actuator 86a to operate the actuator 86a. This method is carried out continuously by the controller 100 so that the relative position of the reel 36 to the header frame 82 can be adjusted in real time.

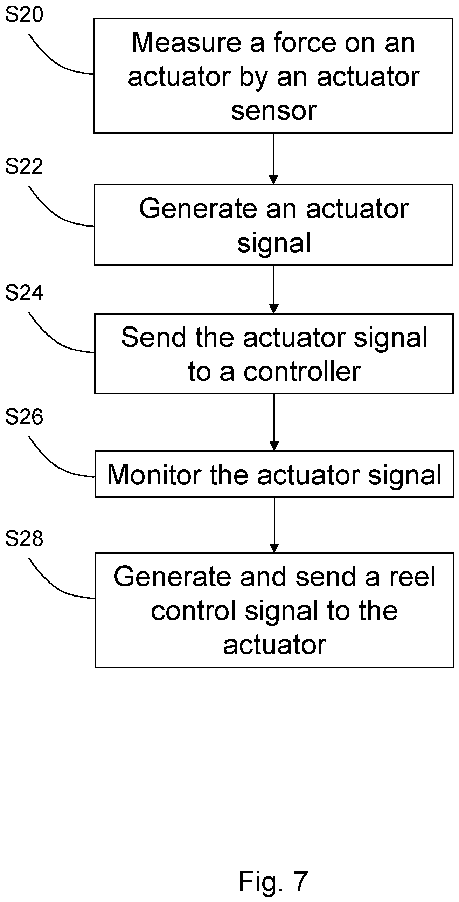

Figure 7 is a detailed flow chart of the flow chart of Figure 6 for header 18 control and provides a method for controlling the header 18 for implementing the embodiments of the invention as described in Figures 1-5.

At step S20, actuator sensors 88a, 88b coupled to respective actuators 86a, 86b measure a force on the respective actuators 86a, 86b caused by contact between the reel 36 and the crop and/or ground as the harvester 10 drives forwards.

At step S22, the actuator sensors 88a, 88b generate respective actuator signals based on the measured force on the respective actuator 86a, 86b and are representative of the force on the reel 36.

At step S24, the actuator signals are sent to the controller 100. At step S26, the controller 100 monitors the actuator signals. For example, depending on the magnitude of the actuator signals, the controller 100 can determine if the reel 36 is in contact with the ground and/or standing crop or lodged crop.

At step S28, the controller 100 generates a reel control signal based on the actuator signals. The controller 100 sends the reel control signal to the actuators 86a, 86b to operate the actuators 86a, 86b to reposition the reel 36 relative to the header frame 82.

## Claims

1. A header (18) for a combine harvester (10), the header (18) comprising:
a header frame (82);
a reel (36) rotatably mounted to the header frame (82);
at least one actuator (86) mounted to the reel (36) for adjusting a position of the reel (36) relative to the header frame (82);
at least one actuator sensor (88), coupled to the at least one actuator (86), and configured to generate an actuator signal representative of a force on the reel (36); and
a controller (100), operably coupled to the at least one actuator sensor (88), and configured to receive the actuator signal from the at least one actuator sensor and (88) to operate the at least one actuator (86) to adjust the position of the reel (36) relative to the header frame (82) in dependence of the actuator signal.

2. The header (18) of claim 1, wherein the at least one actuator (86) is configured for vertically adjusting the position of the reel (36) relative to the header frame (82).

3. The header (18) of claim 1 or 2, wherein the at least one actuator (86) is configured for horizontally adjusting the position of the reel (36) relative to the header frame (82).

4. The header (18) of any preceding claim, wherein the controller (100) is further configured to, based on the actuator signal, detect a ground contact of the reel (36), and to operate the at least one actuator (86) in dependence of the ground contact.

5. The header (18) of claim 4, wherein the controller (100) is further configured to, based on the actuator signal, determine an extent of the ground contact, and to operate the at least one actuator (86) in dependence of the extent of the ground contact.

6. The header (18) of any preceding claim, wherein the controller (100) is further configured to, based on the actuator signal, determine a portion of the reel (36) that is engaged with a crop, and to operate the at least one actuator (86) in dependence of the portion of the reel (36) that is engaged with the crop.

7. The header (18) of any preceding claim, wherein the controller (100) is further configured to adjust a rotational speed of the reel (36), a reel finger angle, a ground speed of the harvester (10), a height of the header frame (82) relative to the ground, or an orientation of the header (18) relative to the harvester (10) in dependence of the actuator signal.

8. The header (18) of any preceding claim, wherein the reel (36) comprises multiple reel segments, and wherein the controller (100) is further configured to individually adjust a position of the multiple reel segments relative to the header frame (100) in dependence of the actuator signal.

9. The header (18) of any preceding claim, wherein the at least one actuator (86) is a hydraulic actuator, an electric actuator, or a pneumatic actuator.

10. The header (18) of any preceding claim, wherein the at least one actuator sensor (88) comprises a load cell or a pressure sensor.

11. The header (18) of any preceding claim, further comprising one or more forward looking sensors (90) operably coupled to the controller (100), wherein the controller (100) is configured to:
- receive a forward looking signal from the one or more forward looking sensors (90),
- process the forward looking signal to determine a crop height in front of the header (18),
- adjust the position of the reel (36) relative to the header frame (82) in dependence of the determined crop height.

12. The header (18) of claim 11, wherein the one or more forward looking sensors (90) comprises at least one of a camera, a LiDAR sensor, a RADAR sensor, and a GPS sensor.

13. A combine harvester (10) comprising:
a header (18) with a header frame (82), a reel (36) rotatably mounted to the header frame (82), at least one actuator (86) mounted to the reel (36) for adjusting a position of the reel (36) relative to the header frame (82), and at least one actuator sensor (88), coupled to the at least one actuator (86), and configured to generate an actuator signal representative of a force on the reel (36); and
a controller (100), operably coupled to the at least one actuator sensor (88), and configured to receive the actuator signal from the at least one actuator sensor (88) and to operate the at least one actuator (86) to adjust the position of the reel (36) relative to the header frame (82) in dependence of the actuator signal.

14. A method of controlling a header (18) of a combine harvester (10), the method comprising:
receiving an actuator signal from at least one actuator sensor (88), coupled to an actuator (86) mounted to a reel (36) of the header (18) for adjusting a position of the reel (36) relative to a header frame (82) of the header (18);
based on the actuator signal, determining a reel control signal for operating the actuator (86) to adjust the position of the reel (36) relative to the header frame (82);
sending the reel control signal to the actuator (86).

15. A method as claimed in claim 14, wherein the position of the reel (36) relative to the header frame (82) is controlled to keep a plurality of reel fingers (84) of the reel (36) close enough to the ground for picking up lodged crop, and to raise the position of the reel (36) relative to the header frame (82) when the actuator signal indicates a predetermined amount of ground contact for the reel fingers (84).
